# EUROPÄISCHE PATENTSCHRIFT

(11) **EP 1 882 091 B1**
(45) Veröffentlichungstag und Bekanntmachung des Hinweises auf die Patenterteilung: **10.09.2008**
(21) Anmeldenummer: 05821662.3
(22) Anmeldetag: 29.12.2005
(51) Int. Cl.: F01N 3/36, F01N 3/20, B01D 53/86

(54) **ABGASANLAGE FÜR EIN KRAFTFAHRZEUG**
EXHAUST GAS SYSTEM FOR A MOTOR VEHICLE
SYSTEME D'ECHAPPEMENT POUR UN VEHICULE AUTOMOBILE

(30) Priorität: 20.05.2005 DE 102005023398
(43) Veröffentlichungstag der Anmeldung: 30.01.2008
(73) Patentinhaber: EMCON Technologies Germany (Augsburg) GmbH, 86154 Augsburg (DE)
(72) Erfinder: VENGHAUS, Helmut, 85051 Ingolstadt (DE); MAYR, Andreas, 86405 Meitingen/Waltershofen (DE); RANALLI, Marco, 86199 Augsburg (DE); KRONER, Peter, 86157 Augsburg (DE); SPEER, Gregg, Columbus, Indiana 47203 (US); SCHMIDT, Stefan, 86462 Langweid/Lech (DE); WATTS, Lee, London EN8 8PW (GB); TELFORD, Clive, Lancaster LAI 5XA (GB); HERRANZ, David, E-Pamplona 31002 (ES); WALLECK, A., Steven, Lakewood, OH 44107 (US)
(74) Vertreter: Sties, Jochen
(86) Internationale Anmeldenummer: PCT/EP2005/014114
(87) Internationale Veröffentlichungsnummer: WO 2006/122581

(56) Entgegenhaltungen:
- EP-A- 0 737 802
- US-A- 4 322 387
- US-A- 4 576 617
- US-A1- 2004 081 592

## Beschreibung

Die Erfindung betrifft eine Abgasanlage für ein Kraftfahrzeug gemäß dem Oberbegriff des Anspruchs 1. Abgasreinigungssysteme im Sinne der Erfindung können insbesondere Dieselpartikelfilter und NOₓ-Speicherkatalysatoren umfassen.

Zur Einhaltung umweltgesetzlicher Vorgaben ist es erforderlich, die Abgase von verbrennungsmotorisch angetriebenen Kraftfahrzeugen zu reinigen. So werden z. B. geeignete Partikelfilter eingesetzt, um die partikelförmigen Emissionen von dieselbetriebenen Kraftfahrzeugen zu verringern. Derartige Partikelfilter müssen von Zeit zu Zeit durch Abbrennen der auf der Filteroberfläche angesammelten Partikel regeneriert werden. Hierzu wird gewöhnlich dem Dieselpartikelfilter ein Oxidationskatalysator vorgeschaltet, der durch Oxidation einer im Abgasstrom befindlichen oxidierbaren Substanz die zum Abbrennen der Rußpartikel benötigte Wärme erzeugt.

Weiterhin kommen zunehmend NOₓ-Speicherkatalysatoren zum Einsatz, die der Reduzierung des Stickoxidausstoßes dienen. Um solche Speicherkatalysatoren zu regenerieren, ist eine Anfettung des Abgases erforderlich. Hierzu bedarf es insbesondere bei Dieselmotoren, die mit Luftüberschuß betrieben werden und deren Abgas daher ebenfalls einen Luftüberschuß aufweist, besonderer Maßnahmen.

Zur Regeneration eines Dieselpartikelfilters oder NOₓ-Speicherkatalysators in der Abgasanlage eines Magergemischmotors ist es also von Zeit zu Zeit nötig, das Abgas mit einer oxidierbaren Substanz anzureichern. Zu diesem Zweck sind Systeme bekannt, die ein zusätzliches Hochdruck-Kraftstoffeinspritzventil verwenden, das im Krümmerbereich der Abgasanlage angeordnet ist und Kraftstoff direkt in den Abgasstrom einspritzt. Diese Systeme haben allerdings den Nachteil, daß eine ausreichende Durchmischung des flüssigen Kraftstoffs mit dem Abgas nicht immer gewährleistet ist.

Darüber hinaus sind Anlagen bekannt (siehe z.B. EP 1 369 557 A1), bei denen eine bestimmte Kraftstoffmenge in die Heizkammer eines außerhalb des Abgasstroms angeordneten Verdampfers eingeleitet wird, wo der Kraftstoff verdampft und anschließend in den Abgasstrom eingebracht wird. Zum Verdampfen des flüssigen Kraftstoffs wird meist eine elektrische Glühkerze verwendet, die einen vergleichsweise hohen Energieverbrauch aufweist.

Aus der US 4 576 617 A ist eine Baugruppe zur Regeneration eines Partikelfilters bekannt, bei der eine bereits verdampfte organische Flüssigkeit durch eine in den Abgasstrom ragende Glühkerze weiter erhitzt und dadurch gecrackt wird. Das gecrackte Gas wird im Inneren eines die Glühkerze umgebenden Gehäuses mit Abgas vermischt und gezündet, wodurch die nötige Wärme zur Oxidation der Kohlenstoffpartikel im Filter erzeugt wird.

Die US 2004/0081592 A1 zeigt ein System, bei dem Kraftstoff in einem senkrecht zur Strömungsrichtung des Abgases angeordneten Gehäuse durch eine Glühkerze verdampft und mit einem Abgasstrom vermischt wird. Die Mischung entweicht über eine Öffnung im Gehäuse, wobei zwischen der Öffnung und einer Zündkerze ein Lichtbogen brennt.

Aus der EP 0 737 802 A2 ist eine Regeneriervorrichtung für ein Abgasreinigungssystem mit einer seitlich in eine Abgasleitung ragenden Glühkerze bekannt, die von einem zylindrischen Körper mit seitlichen Öffnungen umgeben ist.

Die gattungsbildende US 4 322 387 A beschreibt eine einem Partikelfilter vorgeschaltete Regeneriervorrichtung mit einem im Abgasstrom angeordneten spiralförmigen Heizelement, das von einem zylindrischen Gehäuse umgeben ist und den Abgasstrom bei Bedarf aufheizt.

Demgegenüber schafft die Erfindung eine Abgasanlage mit einer Regeneriervorrichtung, die im Vergleich zu den aus dem Stand der Technik bekannten Systemen für eine gleichmäßigere Verteilung der oxidierbaren Flüssigkeit sorgt und zugleich eine geringere Menge an elektrischer Energie benötigt.

Erfindungsgemäß ist dazu eine Abgasanlage mit den Merkmalen des Anspruchs 1 vorgesehen. Die erfindungsgemäße Abgasanlage verfügt über eine Regeneriervorrichtung, die innerhalb eines abgasführenden Rohres angeordnet ist und von einem Teil des Abgases durchströmt wird. Im Gehäuse ist stromaufwärts des Heizelements eine Einspritzdüse für die oxidierbare Flüssigkeit vorgesehen, die die Flüssigkeit in Richtung des Abgasstroms auf das Heizelement sprüht. Die Anordnung der Regeneriervorrichtung im Inneren des Abgasstroms bietet dabei den Vorteil, daß das Heizelement nicht allein durch elektrische Energie, sondern zusätzlich durch die die Kammer der Regeneriervorrichtung durchströmenden Abgase erwärmt wird. Dadurch verringert sich die zum Verdampfen der Flüssigkeit benötigte elektrische Energie. Zusätzlich helfen die durch das Gehäuse strömenden Abgase dabei, die Flüssigkeit durch das Heizelement hindurch zu transportieren.

Gegenüber einer Anordnung eines Heizelements mit vorgeschalteter Flüssigkeitseinspritzdüse unmittelbar im abgasführenden Rohr, also ohne ein die Regeneriervorrichtung umgebendes Gehäuse, zeichnet sich die erfindungsgemäße Ausgestaltung ferner dadurch aus, daß durch das schützende Gehäuse in der Kammer eine vollständigere Verdampfung erzielt wird.

Erfindungsgemäß weist das Gehäuse eine im wesentlichen rohrförmige Gestalt mit einem spitz zulaufenden stromaufwärtigen Ende auf. Auf diese Weise wird erreicht, daß lediglich ein kleiner Teil des verfügbaren Abgases durch das Gehäuse strömt, das darüber hinaus einen vergleichsweise geringen Strömungswiderstand bietet. Durch die kontinuierliche Aufweitung des Gehäuses in Strömungsrichtung des Abgases, die zumindest in einem ersten Teilbereich des Gehäuses gegeben ist, verringert sich zudem die Strömungsgeschwindigkeit des Gases im Inneren des Gehäuses. Dadurch erhöht sich die Verweilzeit des Abgases in der Kammer, was ebenfalls zu einer vollständigeren Verdampfung der eingespritzten Flüssigkeit führt. Die Ausbildung des stromabwärtigen Gehäuseabschnitts als zylindrisches Rohr mit im wesentlichen senkrecht abgeschnittenen Ende bewirkt eine turbulente Strömung im Bereich der Austrittsöffnung, wodurch eine besonders effektive Vermischung des angereicherten Gases aus der Regeneriervorrichtung mit dem übrigen Abgasstrom gewährleistet ist.

Vorteilhaft umfaßt das Heizelement einen porösen Schaum. Dieser weist eine besonders große für die Verdampfung wirksame Oberfläche auf, was einen hohen Wärmetransfer vom Heizelement auf die zu verdampfende Flüssigkeit ermöglicht. Auch die Verweilzeit der Flüssigkeit im Bereich des Heizelements erhöht sich entsprechend.

Bei dem Schaum kann es sich um einen Keramikschaum oder einen metallischen Schaum handeln. Dieser kann zur Erwärmung von Heizdrähten umwickelt oder durchzogen sein, es ist aber auch möglich, eine Spannung direkt an das poröse Material anzulegen.

Auf eine zusätzliche Flüssigkeitsversorgung im Fahrzeug kann verzichtet werden, wenn es sich bei der Flüssigkeit um Kraftstoff handelt.

Weitere Merkmale und Vorteile der Erfindung ergeben sich aus der nachfolgenden Beschreibung anhand der beigefügten Zeichnung. In dieser zeigt:
- Figur 1 eine schematische Teilansicht einer erfindungsgemäßen Abgasanlage; und
- Figur 2 eine vergrößerte Darstellung einer Regeneriervorrichtung, wie sie in der Abgasanlage aus Figur 1 verwendet wird.

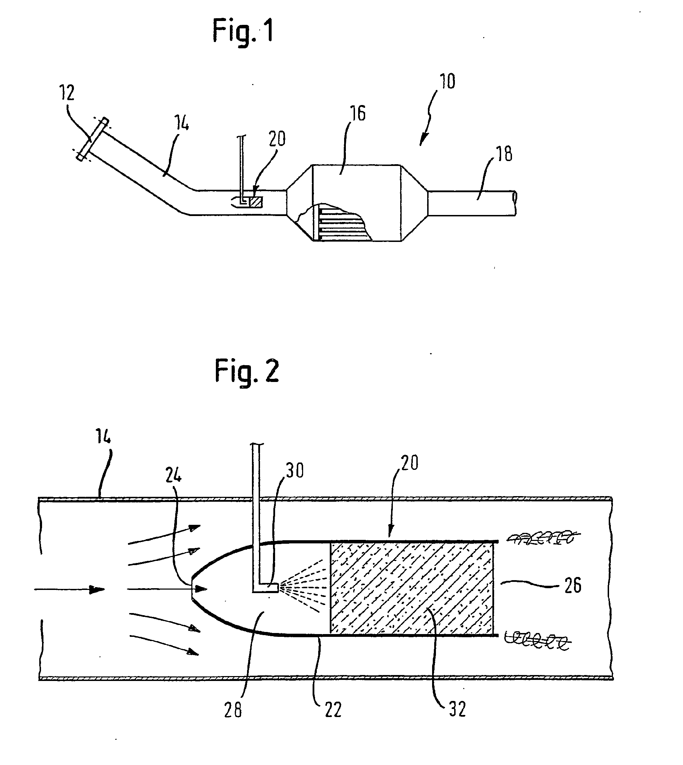

Figur 1 zeigt ausschnittsweise eine Abgasanlage 10, die einem Dieselmotor eines Kraftfahrzeugs (nicht gezeigt) nachgeschaltet wird. Die Abgasanlage 10 weist einen über einen Flansch 12 an einen Krümmer anschließbaren ersten Rohrabschnitt 14 sowie ein Abgasreinigungssystem 16 in Form eines Dieselpartikelfilters mit vorgeschaltetem bzw. integriertem Oxidationskatalysator oder eines NOₓ-Speicherkatalysators auf. Das Abgasreinigungssystem 16 ist über einen zweiten Rohrabschnitt 18 mit einem nicht gezeigten Endbereich der Abgasanlage 10 verbunden. Natürlich kann die erfindungsgemäße Abgasanlage noch weitere Abgasreinigungselemente aufweisen, beispielsweise einen motornahen Oxidationskatalysator oder, im Falle der Kombination von NOₓ- und Partikelminderung, einen SCR-Katalysator.

Zur Regeneration des Abgasreinigungssystems 16 ist eine Regeneriervorrichtung 20 vorgesehen, die im Inneren des ersten Rohrabschnitts 14 unmittelbar stromaufwärts des Abgasreinigungssystems 16 angeordnet ist. Die Regeneriervorrichtung 20 umfaßt ein im wesentlichen rohrförmiges Gehäuse 22, das auf seiner stromaufwärtigen Seite konisch zuläuft und eine kleine Eintrittsöffnung 24 für Abgase aufweist (siehe Figur 2). Auf der stromabwärtigen Seite des Gehäuses 22 ist eine Austrittsöffnung 26 vorgesehen, die sich über annähernd die gesamte Stirnfläche des Gehäuses 22 erstreckt.

Im Inneren des Gehäuses 22 ist eine Kammer 28 ausgebildet, in die eine Einspritzdüse 30 für Kraftstoff hineinragt. Diese ist über eine nicht gezeigte Kraftstoffpumpe bzw. Dosiereinrichtung mit einer Kraftstoffleitung des Fahrzeugs verbunden. Der stromabwärtige Teil der Kammer 28 wird nahezu vollständig von einem Heizelement 32 ausgefüllt, bei dem es sich um einen porösen Keramik-oder metallischen Schaum handelt. Dieser ist zum Zwecke der Erwärmung mit einem stromführenden Draht umwickelt oder von diesem durchzogen, oder es wird eine Spannung an den (elektrisch leitenden) Schaum selbst angelegt. Alternativ kann als Heizelement 32 auch eine plattenförmige, wabenartige Keramikstruktur vorgesehen sein, die die Form des Innendurchmessers des Gehäuses 22 hat. Entscheidend bei der Wahl des Heizelements 32 ist lediglich, daß es eine Struktur aufweist, die sich durch eine möglichst große Oberfläche auszeichnet und die dem durchströmenden Gas einen gewissen, jedoch nicht übermäßigen Widerstand leistet.

Zur Einleitung der Regeneration wird Kraftstoff durch die Einspritzdüse 30 in die Kammer 28 in Richtung des Heizelements 32 eingespritzt. Dieser Kraftstoff trifft auf das Heizelement 32, das eine besonders große Oberfläche für die Verdampfung des Kraftstoffs bietet, und verdampft. Gleichzeitig strömt ein Teil des Abgases (in Figur 2 durch Pfeile angedeutet) durch die Eintrittsöffnung 24 in die Kammer 28, durch die Poren oder Öffnungen des Heizelements 32 und schließlich unter Mitführung des nunmehr dampfförmigen Kraftstoffs durch die Austrittsöffnung 26 wieder aus dem Gehäuse 22 hinaus. Es wird also ein Teil des Abgases dazu verwendet, den eingespritzten Kraftstoff durch das Heizelement 32 zu transportieren. Ferner wird die Wärme des die Kammer 28 durchströmenden Abgases zur zusätzlichen Aufheizung des Heizelements genutzt, wodurch sich die zum Verdampfen des Kraftstoffs benötigte elektrische Energie in vorteilhafter Weise verringern läßt. Es wird also sowohl elektrisch erzeugte Wärme als auch die Wärme des Abgases zur Einleitung der Regeneration des Abgasreinigungssystems 16 verwendet.

Bedingt durch die spezielle Form des Gehäuses 22 mit der sich in Strömungsrichtung zunächst aufweitenden Kammer 28 verringert sich die Strömungsgeschwindigkeit des Abgases im Inneren der Kammer 28. Auf diese Weise wird eine längere Verweilzeit des Abgases in der Kammer 28 erreicht, wodurch ein vollständiges Verdampfen des zugeführten Kraftstoffs sichergestellt ist. Die Form des Gehäuses 22 und seine parallele Anordnung zur Außenwand des ersten Rohrabschnitts 14 sorgt zudem für eine besonders gute Vermischung des mit Kraftstoff angereicherten Abgases aus der Kammer 28 mit dem außen am Gehäuse 22 vorbeiströmenden Abgas. Insbesondere die Ausbildung des rohrförmigen Gehäuses 22 im Bereich der Austrittsöffnung 26 mit dem abrupten Ende sorgt für starke Turbulenzen stromabwärts des Gehäuses 22 (angedeutet durch die Wirbel in Figur 2), die eine optimale Verteilung des zugeführten Kraftstoffs ermöglichen. Dazu trägt auch der Druckunterschied zwischen den Gasströmen aufgrund der unterschiedlichen Strömungsgeschwindigkeiten im Inneren der Kammer 28 und außerhalb des Gehäuses bei.

## Patentansprüche

1. Abgasanlage für ein Kraftfahrzeug, mit wenigstens einem Abgasreinigungssystem (16) und wenigstens einer Regeneriervorrichtung (20) für das Abgasreinigungssystem (16), mittels der eine oxidierbare Flüssigkeit in Dampfform in den Abgasstrom vor dem Abgasreinigungssystem (16) eingebracht werden kann, wobei die Regeneriervorrichtung (20) ein Gehäuse (22) mit einer darin ausgebildeten Kammer (28) sowie ein in der Kammer (28) positioniertes Heizelement (32) umfaßt und wobei das Gehäuse (22) auf seiner stromaufwärtigen Seite eine Eintrittsöffnung (24) für Abgase und auf seiner stromabwärtigen Seite eine Austrittsöffnung (26) aufweist und im Inneren des Abgasstroms angeordnet ist, **dadurch gekennzeichnet, daß** das Gehäuse (22) eine im wesentlichen rohrförmige Gestalt mit einem spitz zulaufenden stromaufwärtigen Ende aufweist.

2. Abgasanlage nach Anspruch 1, **dadurch gekennzeichnet, daß** das Heizelement (32) einen porösen Schaum umfaßt.

3. Abgasanlage nach Anspruch 2, **dadurch gekennzeichnet, daß** es sich bei dem Schaum um einen Keramikschaum handelt.

4. Abgasanlage nach Anspruch 2, **dadurch gekennzeichnet, daß** es sich bei dem Schaum um einen metallischen Schaum handelt.

5. Abgasanlage nach einem der vorhergehenden Ansprüche, **dadurch gekennzeichnet, daß** es sich bei der Flüssigkeit um Kraftstoff handelt.

6. Abgasanlage nach einem der vorhergehenden Ansprüche, **dadurch gekennzeichnet, daß** das Abgasreinigungssystem (16) ein Dieselpartikelfilter ist.

7. Abgasanlage nach einem der vorhergehenden Ansprüche, **dadurch gekennzeichnet, daß** das Abgasreinigungssystem (16) ein NOₓ-Speicherkatalysator ist.

## Claims

1. An exhaust gas system for a motor vehicle, comprising at least one exhaust gas cleaning system (16) and at least one regeneration device (20) for the exhaust gas cleaning system (16), by means of which regeneration device an oxidizable fluid in vapor form can be introduced into the exhaust gas stream ahead of the exhaust gas cleaning system (16), the regeneration device (20) comprising a housing (22) with a chamber (28) formed in it as well as a heating element (32) positioned in the chamber (28), the housing (22) having on its upstream side an inlet opening (24) for exhaust gases and on its downstream side an outlet opening (26) and being arranged in the interior of the exhaust gas stream, **characterized in that** the housing (22) has an essentially tubular shape with a tapered upstream end.

2. The exhaust gas system according to claim 1, **characterized in that** the heating element (32) comprises a porous foam.

3. The exhaust gas system according to claim 2, **characterized in that** the foam is a ceramic foam.

4. The exhaust gas system according to claim 2, **characterized in that** the foam is a metallic foam.

5. The exhaust gas system according to any of the preceding claims, **characterized in that** the fluid is a fuel.

6. The exhaust gas system according to any of the preceding claims, **characterized in that** the exhaust gas cleaning system (16) is a diesel particulate filter.

7. The exhaust gas system according to any of the preceding claims, **characterized in that** the exhaust gas cleaning system (16) is a NOₓ storage catalytic converter.

## Revendications

1. Installation d'échappement pour un véhicule automobile, comportant au moins un système d'épuration de gaz d'échappement (16) et au moins un dispositif de régénération (20) pour le système d'épuration de gaz d'échappement (16), au moyen de laquelle un liquide oxygénable sous forme de vapeur peut être introduit dans le flux de gaz d'échappement en amont du système d'épuration de gaz d'échappement (16), le dispositif de régénération (20) comprenant un boîtier (22) avec une chambre (28) réalisée dans celui-ci ainsi qu'un élément de chauffage (32) positionné dans la chambre (28), et le boîtier (22) présentant sur son côté amont un orifice d'entrée (24) pour des gaz d'échappement et sur son côté aval un orifice de sortie (26), et étant agencé à l'intérieur du flux de gaz d'échappement, **caractérisé en ce que** le boîtier (22) présente une forme sensiblement tubulaire avec une extrémité amont effilée.

2. Installation d'échappement selon la revendication 1, **caractérisé en ce que** l'élément de chauffage (32) comprend une mousse poreuse.

3. Installation d'échappement selon la revendication 2, **caractérisé en ce que** la mousse est une mousse de céramique.

4. Installation d'échappement selon la revendication 2, **caractérisé en ce que** la mousse est une mousse métallique.

5. Installation d'échappement selon l'une des revendications précédentes, **caractérisé en ce que** le liquide est du carburant.

6. Installation d'échappement selon l'une des revendications précédentes, **caractérisé en ce que** le système d'épuration de gaz d'échappement (16) est un filtre à particules diesel.

7. Installation d'échappement selon l'une des revendications précédentes, **caractérisé en ce que** le système d'épuration de gaz d'échappement (16) est un catalyseur accumulateur de Noₓ.
